# EUROPEAN PATENT SPECIFICATION

(11) **EP 3 952 704 B1**
(45) Date of publication and mention of the grant of the patent: **26.04.2023**
(21) Application number: 20723942.7
(22) Date of filing: 30.03.2020
(51) Int. Cl.: A47J 31/02

(54) **LIQUID EXTRACTION SYSTEM WITH FILTER FOR POWDERS AND EQUIPPED WITH CARAFE**
FLÜSSIGKEITSEXTRAKTIONSSYSTEM MIT FILTER FÜR PULVER UND AUSGESTATTET MIT KARAFFE
SYSTÈME D'EXTRACTION DE LIQUIDE AVEC FILTRE POUR POUDRES ET ÉQUIPÉ D'UNE CARAFE

(30) Priority: 10.04.2019 IT 201900005472
(43) Date of publication of application: 16.02.2022
(73) Proprietor: TRC S.r.l., 14100 Asti (IT)
(72) Inventor: TORCHIO, Francesca, 14100 ASTI (IT)
(74) Representative: Garavelli, Paolo
(86) International application number: PCT/IT2020/050080
(87) International publication number: WO 2020/208663

(56) References cited:
- US-A1- 2004 025 705
- US-A1- 2010 263 548
- US-A1- 2011 005 400
- US-A1- 2019 069 707

## Description

The present invention refers to a liquid extraction system with filter for powders and equipped with a carafe, in turn equipped with gravitational funnel and other accessories.

According to the Applicant's knowledge, there currently are no carafes equipped with similar arrangements to that of the present invention.

Document US-A1-2011/005400 discloses a system according to the preamble of Claim 1.

Object of the present invention is therefore providing a liquid extraction system which is based on the principle of slowly pouring hot or cold water or other mixed liquids, through a layer of ground powder (coffee, tea, spices or other mixtures), placed in a filter, made of paper, metal, cloth or other filtering material, inside a funnel, with which the extraction system is equipped. By leaching, the liquid dissolves the substances contained in the powder, transferring them in the beverage which will be served in the carafe.

The above and other objects and advantages of the invention, as will appear from the following description are obtained with a liquid extraction system equipped with gravitational funnel as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as detailed in the enclosed claims.

The present invention will be better described by some preferred embodiments thereof, provided as a non-limiting example, with reference to the enclosed drawings, in which:

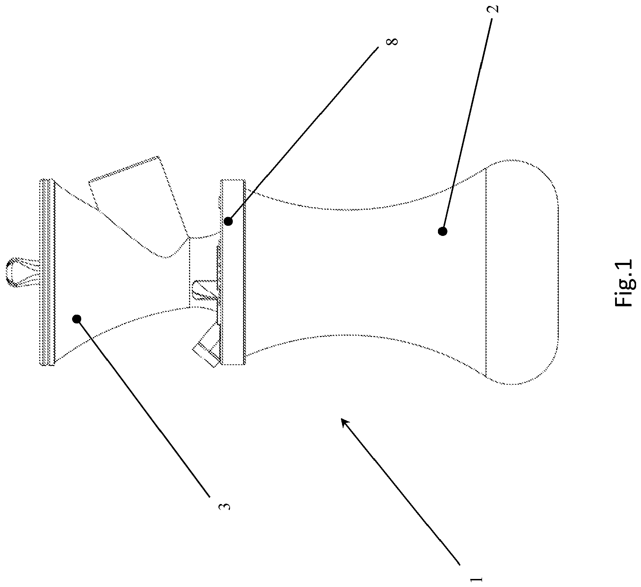

- Figure 1 shows a side view of an embodiment of the liquid extraction system according to the present invention;

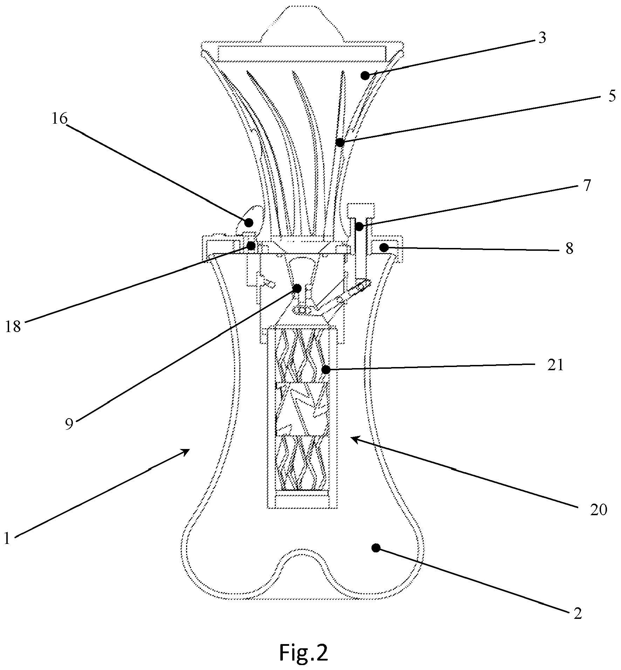

- Figure 2 shows a sectional view of the liquid extraction system of Figure 1;

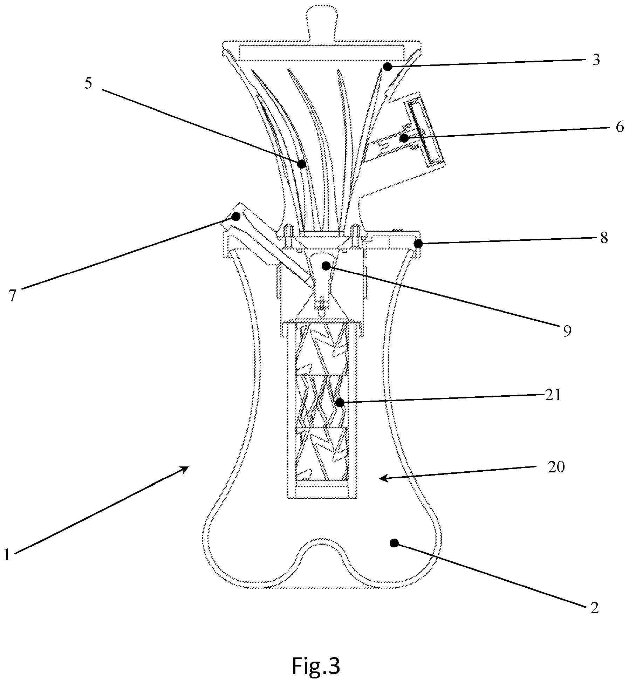

- Figure 3 shows another sectional view of the liquid extraction system of Figure 1; and

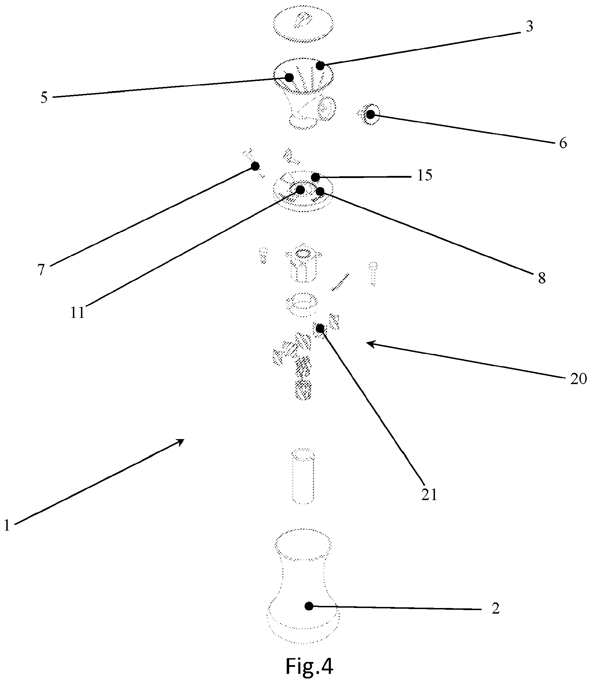

- Figure 4 shows an exploded perspective view of the liquid extraction system of Figure 1.

With reference to the Figures, the liquid extraction system 1 of the invention is equipped with a carafe/decanter 2 on whose top a gravitational funnel 3 is placed.

In science: when a sphere is launched with a suitable horizontal speed inside a gravitational funnel, it follows a circular trajectory which a bit at a time moves in a spiral downwards, while its speed gradually increases.

The trajectory of the sphere appears as the orbit of a planet which rotates around the sun. The hole of the funnel 3 is the sun, the sphere is a planet and the gravitational force is supplied by the wall of the funnel 3. In order for the sphere to behave as described, the profile of the funnel 3 must be hyperbolic.

Internally, the funnel 3 is marked by ribs 5, which follow the hyperbole trajectory, which, allowing air to go out, creates a gravitational acceleration during the extraction.

Externally, the funnel 3 is equipped with a well-type thermometer 6, which allows measuring the temperature when pouring or infusing, and monitoring the temperature variations for the whole length of the extraction.

In science: when a fluid flows inside the pipe, it keeps its mass constant. If it must pass inside a bottleneck, to keep its mass unchanged, the fluid is compelled to accelerate, creating a depression, while going out towards the widest section, it tends to slow down.

Due to the graded regulating valve 15, placed on the dish 8 of the carafe 2, air is sucked inside a Venturi pipe 9 through a slit 11, in which air and fluid are joined, naturally oxygenating the obtained fluid.

The side passage 13, placed on the dish 8 of the carafe 2, allows the metered injection of three microelements, liquids, essences or gases.

This system, in addition to guaranteeing the dosing accuracy, has been adapted to its use for several fields (coffee making, mixology, etc.) and guarantees the complete passage of the elements with the help of external injectors 7 or due to the backwash of the Venturi effect.

The side knob 16, placed on the dish 8 of the carafe 2, allows the manual opening of the closing plug 18 of the exiting liquids.

This system, in addition to guaranteeing the closure of the passage of the liquids in the funnel 3, closes the lateral injection; once opened, the plug 18 guarantees the complete passage of the liquids and of the elements also due to the backwash of the Venturi effect: therefore, there is a correct mixing of the extracted fluid with possible essences, gases or other various elements.

The liquid extraction system 1 comprises, in addition, a static mixer 20, composed of various elements 21, which are fastened to the piping; these elements 21 can have various shapes: "braided" or helical structures. It can have different possible fastening devices: bayonet type, with thread or pressure.

The two fluid currents which are channeled in the piping, together with the one created by the backwash of air and of other possible elements, meet these fixed elements 21 being subjected to sudden direction variations, mutually meeting and mixing.

A static mixer 20 improves both the exchange of matter (this in order to have a more uniform concentration), and the exchange of heat (this in order to have a more uniform temperature).

The efficacy of mixing increases when the number of elements of which the static mixer 20 is composed increases, being able to arrive even over 90% of molecular mixing, extracting more organoleptic complexity and allowing the aromatic bouquet to be fully and more quickly expressed.

The base of the carafe/decanter 2 has a toroidal shape, which recalls the shape of a donut.

This shape allows the fluids to spirally move inwards and outwards on the same toroid surface.

The carafe/decanter 2, through its particular shape, enlarged in its bottom and narrow in its neck, enables an oxygenation, extracting more organoleptic complexity and allowing the aromatic bouquet to be fully and more quickly expressed.

The dish or cover 8 of the liquid extraction system 1 is equipped with a gasket (not shown) for a more stable closure.

As variation of the present invention, in the future, the cover 8 will be a pressure-tight cover, on whose external part there will be a small pump (not shown) or other system for injecting / increasing the internal pressure to the funnel 3, so that, by opening the closing plug 18 of the liquids, they exit under pressure. On the same cover 8 there will also be a manometer (not shown), which reads the internal pressure of the gravitational funnel 3 and therefore of the liquid extraction system 1.

As another variation of the present invention, the static mixer 20 can be made separately from the carafe 1 to adapt it to other objects or products which will be new or already present on the market.

Moreover, as further variation, to the side passage for injection of the elements or gases, a suitable adapter (not shown) will be added, to which a small glass with variable capacity (not shown) will be fastened, open or closed, whose liquids inside will be mixed by fall or depression of the Venturi pipe 5.

On the bottom of the carafe/decanter 2 a special refrigerating pack can also be placed, to create a thermal shock for the exiting liquid.

At the end of the static mixer 20, or directly under the Venturi pipe 5, a further filter can be applied, for special extractions or filtrations.

The system 1 of the present invention can be sold complete of every part thereof, or separate, and parts of the system 1 can be assembled or disassembled also afterwards, or used with other objects designed in the future or possibly already on the market, thanks to suitable adapters.

## Claims

1. Liquid extraction system (1) equipped with a carafe/decanter (2), on whose top a gravitational funnel (3) is placed, designed to receive a liquid, preferably hot or cold water, through a layer of ground food, preferably coffee or tea, placed in a filter, preferably made of paper, metal, cloth or other filtering material, inside the funnel (3), wherein, by leaching, the liquid dissolves the soluble substances contained in the food powder, transferring them in the beverage which will be served in the carafe (2), **characterized in that** said gravitational funnel (3) has a hyperbolic profile.

2. Liquid extraction system (1) according to claim 1, **characterized in that**, internally, the funnel (3) is marked by ribs (5), which follow the hyperbole trajectory, which, allowing air to go out, create a gravitational acceleration during the extraction.

3. Liquid extraction system (1) according to claim 1 or 2, **characterized in that**, externally, the funnel (3) is equipped with a well-type thermometer (6), which allows measuring the temperature when pouring or infusing, and monitoring the temperature variations for the whole length of the extraction.

4. Liquid extraction system (1) according to claim 1, 2 or 3, **characterized in that** it is further equipped with a graded regulating valve (15), placed on a dish (8) of the carafe (2), for which air is sucked inside a Venturi pipe (9) through a slit (11) in which air and fluid are joined.

5. Liquid extraction system (1) according to claim 4, **characterized in that** it is further equipped with a side passage (13), placed on the dish (8) of the carafe (2), which allows the metered injection of microelements, essences, liquids or gases, guaranteeing the complete passage of the elements with the help of external injectors (7) or due to the backwash of the Venturi effect.

6. Liquid extraction system (1) according to claim 4 or 5, **characterized in that** it further comprises a side knob (16), placed on the dish (8), which allows the manual opening of a closing plug (18) of the exiting liquids, so that, in addition to guaranteeing the closure of the passage of the liquids in the funnel (3), the lateral injection is closed, and, once opened, the plug (18) guarantees the complete passage of liquids and of elements also due to the backwash of the Venturi effect.

7. Liquid extraction system (1) according to any one of the previous claims, **characterized in that** it further comprises a static mixer (20), composed of various elements (21), which are fastened to the piping, such elements (21) having different shapes, such as braided or helical structures, so that the two fluid currents, which are channeled in the piping, meet these fixed elements (21) being subjected to sudden direction variations, mutually meeting and mixing.

8. Liquid extraction system (1) according to any one of the previous claims, **characterized in that** the base of the carafe (2) has a toroidal shape, similar to a donut, such shape allowing the fluids to spirally move inwards or outwards on the same toroid surface.

9. Liquid extraction system (1) according to any one of claims 6 to 8, **characterized in that** the cover (8) is a pressure-tight cover, on whose external part there is a small pump or other system for injecting/increasing the internal pressure in the funnel (3), so that, by opening the closing plug (18) of the liquids, they exit under pressure, on the cover (8) there also being a manometer, designed to read the internal pressure of the liquid extraction system (1).

10. Liquid extraction system (1) according to any one of the previous claims, **characterized in that**, to the side passage for injecting the elements, liquids, essences or gases, a suitable adapter is added, to which a small glass with variable capacity is fastened, open or closed, whose liquids inside will be mixed by fall.

## Patentansprüche

1. Flüssigkeitsextraktionssystem (1), ausgestattet mit einer Karaffe/Decanter (2), auf der ein Gravitationstrichter (3) angeordnet ist, der dazu bestimmt ist, eine Flüssigkeit, vorzugsweise heißes oder kaltes Wasser, durch eine Schicht gemahlener Lebensmittel aufzunehmen. vorzugsweise Kaffee oder Tee, in einen Filter gegeben, vorzugsweise aus Papier, Metall, Stoff oder anderem Filtermaterial, innerhalb des Trichters (3), in dem die Flüssigkeit durch Sickern die in dem Lebensmittelpulver enthaltenen löslichen Substanzen auflöst und sie überträgt in das Getränk, das in der Karaffe/Decanter (2) serviert wird, **dadurch gekennzeichnet, dass** der Gravitationstrichter (3) ein hyperbolisches Profil hat.

2. Flüssigkeitsextraktionssystem (1) nach Anspruch 1, **dadurch gekennzeichnet, dass** der Trichter (3) im Inneren durch Rippen (5) gekennzeichnet ist, die der Flugbahn der Hyperbel folgen, die, indem sie die Luft entweichen lassen, Schwerkraft erzeugen Beschleunigung beim Absaugen.

3. Flüssigkeitsextraktionssystem (1) nach Anspruch 1 oder 2, **dadurch gekennzeichnet, dass** der Trichter (3) außen mit einem Taschenthermometer (6) ausgestattet ist, das es erlaubt, die Temperatur während des Ausgießens oder Brühens zu messen und zu überwachen Temperaturänderungen während der Extraktion.

4. Flüssigkeitsextraktionssystem (1) nach Anspruch 1, 2 oder 3, **dadurch gekennzeichnet, dass** es auch mit einem abgestuften Regulierventil (15) ausgestattet ist, das sich auf einer Platte (8) der Karaffe/Decanter (2) befindet, wofür die Luft wird durch einen Schlitz (11) in ein Venturirohr (9) gesaugt, in dem sich Luft und Flüssigkeit vereinigen.

5. Flüssigkeitsextraktionssystem (1) nach Anspruch 4, **dadurch gekennzeichnet, dass** es auch mit einem seitlichen Durchgang (13) ausgestattet ist, der auf der Platte (8) der Karaffe/Decanter (2) platziert ist, der die dosierte Injektion von Mikroelementen ermöglicht. Essenzen, Flüssigkeiten oder Gase, wobei der vollständige Durchgang der Elemente mit Hilfe externer Injektoren (7) oder dank des Ansaugens des Venturi-Effekts gewährleistet wird.

6. Flüssigkeitsextraktionssystem (1) nach Anspruch 4 oder 5, **dadurch gekennzeichnet, dass** es auch einen seitlichen Knopf (16) umfasst, der auf der Platte (8) platziert ist, der das manuelle Öffnen einer Verschlusskappe (18) des austretenden Flüssigkeiten, daher wird zusätzlich zum Verschließen des Durchgangs der Flüssigkeiten im Trichter (3) die seitliche Einspritzung geschlossen, und sobald sie geöffnet ist, garantiert die Kappe (18) den vollständigen Durchgang der Flüssigkeiten und der Elemente auch dank des Sogs des Venturi-Effekts.

7. Flüssigkeitsextraktionssystem (1) nach einem der vorhergehenden Ansprüche, **dadurch gekennzeichnet, dass** es auch einen statischen Mischer (20) umfasst, bestehend aus verschiedenen Elementen (21), die an dem Rohr befestigt sind, wobei diese Elemente (21) mit verschiedenen Formen, wie verschlungenen oder spiralförmigen Strukturen, wodurch die beiden Fluidströme, die in dem Rohr kanalisiert werden, auf diese feststehenden Elemente (21) treffen, plötzliche Richtungsänderungen erfahren, sich treffen und vermischen.

8. Flüssigkeitsextraktionssystem (1) nach einem der vorangehenden Ansprüche, **dadurch gekennzeichnet, dass** der Boden der Karaffe/Decanter (2) eine ringförmige Form hat, ähnlich einem Donut, wobei diese Form es den Flüssigkeiten erlaubt, spiralförmig nach innen und nach außen zu gelangen gleiche Oberfläche des Torus.

9. Flüssigkeitsextraktionssystem (1) nach einem der vorhergehenden Ansprüche 6 bis 8, **dadurch gekennzeichnet, dass** der Deckel (8) ein druckfester Deckel ist, an dessen Außenseite sich eine Pumpe oder ein anderes System zum Injizieren/den Druck im Inneren des Trichters (3) erhöhen, so dass beim Öffnen der Verschlusskappe (18) die Flüssigkeiten unter Druck austreten, am Deckel (8) befindet sich außerdem ein Manometer, das den Innendruck der Flüssigkeit ablesen soll Absaugsystem (1).

10. Flüssigkeitsextraktionssystem (1) nach einem der vorangehenden Ansprüche, **dadurch gekennzeichnet, dass** dem seitlichen Durchgang für die Injektion der flüssigen Elemente, Essenzen oder Gase ein geeigneter Adapter hinzugefügt wird, zu dem ein Becher mit variablem Fassungsvermögen, offen oder geschlossen, deren Flüssigkeiten sich durch Fallen vermischen.

## Revendications

1. Système d'extraction de liquide (1) équipé d'une carafe/décanteur (2), au sommet de laquelle est placé un entonnoir gravitationnel (3), destiné à recevoir un liquide, de préférence de l'eau chaude ou froide, à travers une couche de nourriture broyée, de préférence du café ou du thé, placé dans un filtre, de préférence en papier, métal, tissu ou autre matériau filtrant, à l'intérieur de l'entonnoir (3), dans lequel, par percolation, le liquide dissout les substances solubles contenues dans la poudre alimentaire, en les transférant dans la boisson qui sera servie dans la carafe/décanteur (2), **caractérisé par le fait que** ledit entonnoir gravitationnel (3) a un profil hyperbolique.

2. Système d'extraction de liquide (1) selon la revendication 1, **caractérisé en ce que**, intérieurement, l'entonnoir (3) est marqué par des nervures (5), qui suivent la trajectoire de l'hyperbole, qui, permettant à l'air de s'échapper, créent une force gravitationnelle. accélération lors de l'extraction.

3. Système d'extraction de liquide (1) selon la revendication 1 ou 2, **caractérisé en ce que**, extérieurement, l'entonnoir (3) est équipé d'un thermomètre de poche (6), qui permet de mesurer la température lors du versement ou de l'infusion et de surveiller changements de température tout au long de l'extraction.

4. Système d'extraction de liquide (1) selon la revendication 1, 2 ou 3, **caractérisé en ce qu'**il est également équipé d'une vanne de régulation graduée (15), située sur un plateau (8) de la carafe/décanteur (2), pour laquelle l'air est aspiré dans un tube venturi (9) à travers une fente (11) dans laquelle l'air et le fluide se rejoignent.

5. Système d'extraction de liquide (1) selon la revendication 4, **caractérisé en ce qu'**il est également équipé d'un passage latéral (13), placé sur le plateau (8) du la carafe/décanteur (2), qui permet l'injection dosée de microéléments, essences, liquides ou gazeuses, garantissant le passage complet des éléments à l'aide d'injecteurs extérieurs (7) ou grâce à l'aspiration de l'effet Venturi.

6. Système d'extraction de liquide (1) selon la revendication 4 ou 5, **caractérisé en ce qu'**il comprend également un bouton latéral (16), placé sur la plaque (8), qui permet l'ouverture manuelle d'un bouchon de fermeture (18) du liquides sortants, donc, en plus de garantir la fermeture du passage des liquides dans l'entonnoir (3), l'injection latérale est fermée, et, une fois ouvert, le bouchon (18) garantit le passage complet des liquides et du éléments grâce aussi à l'aspiration de l'effet Venturi.

7. Système d'extraction de liquide (1) selon l'une quelconque des revendications précédentes, **caractérisé en ce qu'**il comprend également un mélangeur statique (20), constitué de divers éléments (21), qui sont fixés à la canalisation, ces éléments (21) ayant des formes diverses, telles que des structures entrelacées ou hélicoïdales, les deux courants de fluide, qui sont canalisés dans la conduite, rencontrent ces éléments fixes (21) subissant de brusques variations de direction, se rencontrent et se mélangent.

8. Système d'extraction de liquide (1) selon l'une quelconque des revendications précédentes, **caractérisé en ce que** la base de la carafe/décanteur (2) a une forme toroïdale, semblable à un beignet, cette forme permettant aux fluides de s'enrouler vers l'intérieur et vers l'extérieur sur le même surface du tore.

9. Système d'extraction de liquide (1) selon l'une quelconque des revendications précédentes de 6 à 8, **caractérisé en ce que** le couvercle (8) est un couvercle étanche à la pression, à l'extérieur duquel se trouve une pompe ou un autre système d'injection/ augmenter la pression à l'intérieur de l'entonnoir (3), de sorte qu'en ouvrant le bouchon de fermeture (18) les liquides sortent sous pression, sur le couvercle (8) se trouve également un manomètre, conçu pour lire la pression interne du liquide système d'aspiration (1).

10. Système d'extraction de liquide (1) selon l'une quelconque des revendications précédentes, **caractérisé en ce qu'**un adaptateur approprié sera ajouté au passage latéral pour l'injection des éléments liquides, essences ou gaz, auquel une coupelle de contenance variable, ouvert ou fermé, dont les liquides à l'intérieur vont se mélanger en tombant.
